# EUROPEAN PATENT APPLICATION

(11) **EP 2 752 339 A1**
(43) Date of publication of application: **09.07.2014**
(21) Application number: 11871257.9
(22) Date of filing: 29.09.2011
(51) Int. Cl.: B60T 7/12

(54) **SAFETY BRAKING APPARATUS FOR AN AUTOMATED VEHICLE**

(30) Priority: 25.08.2011 KR 20110084969
(71) Applicant: Kang, Seoung Sam, Sokcho-si, Gangwon-do 217-809 (KR)
(72) Inventor: Kang, Seoung Sam, Sokcho-si, Gangwon-do 217-809 (KR)
(74) Representative: Stanley, David William
(86) International application number: PCT/KR2011/007190
(87) International publication number: WO 2013/027883

(57) **Abstract**

Provided is a safety braking apparatus applied to an automated vehicle. The safety braking apparatus is for preventing minor collisions by sensing other vehicles or objects when the automated vehicle moves at a low speed when a driver does not step on an acceleration pedal. The safety braking apparatus includes an actuator for forcedly pulling a brake pedal to stop the automated vehicle, and a control circuit for controlling the actuator. The control circuit includes circuit units for sensing velocity and sensing objects, which are sequentially controlled by using a plurality of relay devices, and thus, the control circuit may be additionally mounted in the automated vehicle without changing a program of other electronic control devices such as an electronic control unit (ECU). Therefore, the safety braking apparatus may be applied to existing vehicles.

## Description

### TECHNICAL FIELD

The present invention relates to a safety braking apparatus of a vehicle equipped with an automatic transmission (hereinafter, referred to as an automated vehicle), and in particular, to an automatic braking for preventing a collision by sensing other vehicles or objects in front of and behind a vehicle when the vehicle moves at a low velocity without acceleration.

### BACKGROUND ART

A distance for recognizing other adjacent vehicles or obstacles while driving a vehicle may vary depending on a driver. In particular, the driver may not recognize obstacles located outside his or her viewing angle. Thus, collisions with other vehicles or obstacles frequently occur due to a variation in the recognition distance of the driver or due to obstacles that are out of sight of the driver.

To prevent such collisions, the following patent documents disclose methods of controlling a vehicle by sensing objects located in front of or behind the vehicle.

Korean Laid-open Patent No. 10-1996-0004128 discloses a method of performing an automatic braking operation through manipulation of a brake pedal, by installing an additional motor capable of forcedly manipulating the brake pedal and a gear train and driving the motor when a rear object is sensed.

Korean Laid-open Patent No. 10-1997-0046444 and Korean Laid-open Utility Model No. 20-1998-0039864 disclose a method of automatically performing an engine braking operation by estimating a dangerous distance according to a velocity of a vehicle or with respect to front or rear objects of the vehicle, and then, directly controlling a solenoid valve for a transmission or driving an additional motor provided to manipulate the solenoid valve to forcedly move a transmission lever to a neutral or low gear location.

Korean Laid-open Patent No. 10-1998-0047781 discloses a method of performing a braking operation, for example, manipulating a brake pedal, by installing an additional solenoid bar (plunger) that may forcedly operate a master cylinder that is connected to the brake pedal, and driving the solenoid bar after estimating a dangerous distance according to a velocity of the vehicle or with respect to a front object to operate the master cylinder.

Korean Laid-open Patent No. 10-1999-0015166 discloses a method of automatically reducing a velocity of a vehicle by providing an actuator operated by a negative pressure generated from a surge tank of an engine so as to forcedly manipulate a brake pedal by half a degree, a solenoid valve controlling the negative pressure, and a connection mechanism between the actuator and the brake pedal, and controlling the solenoid valve to forcedly manipulate the brake pedal by half a degree after estimating a dangerous distance by sensing a rear object and a velocity of the vehicle.

### DETAILED DESCRIPTION OF THE INVENTION

### TECHNICAL PROBLEM

Unlike a vehicle equipped with a manual transmission, an automated vehicle equipped with an automatic transmission is driven by a driver using only one foot without manipulating a clutch when shifting a gear, and the automated vehicle moves when the driver takes his/her foot off a brake pedal even if the driver does not step on an acceleration pedal in a state where a gearshift is in a drive or a reverse mode. Thus, when the vehicle moves slowly and stops repeatedly due to a traffic jam or the vehicle has to cautiously move a short distance in a narrow space in a case of parking, the driver repeatedly takes his/her foot on and off the brake pedal to move the vehicle forward or backward little by little.

In general, if there is a sufficient distance between the vehicle and front and rear vehicles or obstacles as in the case of parking, as well as driving, the driver would move faster by working an acceleration pedal. That is, minor collisions of the automated vehicle mostly occur when the vehicle moves forward or backward little by little due to the driver repeatedly taking his/her foot on and off the brake pedal without accelerating the vehicle.

According to the above methods disclosed in the above patent documents, a dangerous distance within which rear-end collisions or minor collisions may occur is estimated according to a current velocity of the vehicle or detection of an object. However, the velocity of the vehicle is variable due to frequent acceleration and braking operations, and thus, there is no actual efficiency in estimating the dangerous distance during high speed driving. Moreover, an unintentional braking operation during the high speed driving may make the driver feel anxious.

Also, after performing an automatic braking operation when front and rear vehicles or an object have been detected, the vehicle has to able to keep moving in a reverse direction through a gear shift. However, according to the conventional arts described above, there is no appropriate unit for cancelling the automatic braking operation, and thus, the vehicle may not be moved unless the front and rear vehicles or obstacles are removed.

Meanwhile, in order to realize a control unit for performing the automatic braking operation according to the conventional arts, a program of an electronic control unit (ECU) that controls states of an engine, an automatic transmission, or an automatic braking system in the vehicle has to be changed, and thus, the above methods may not be applied to conventional automated vehicles.

The present invention provides a safety braking apparatus of an automated vehicle, which is capable of automatically preventing minor collisions by sensing front and rear objects while the automated vehicle is moved forward or backward little by little as a driver repeatedly takes his/her foot on and off a brake pedal while slowly driving or parking the automated vehicle, is capable of cancelling the automatic braking mode so that the vehicle moves safely and naturally after the automatic braking is performed, and is simply mounted in an automated vehicle without changing a program of an ECU in the vehicle.

### TECHNICAL SOLUTION

According to an aspect of the present invention, there is provided a safety braking apparatus of an automated vehicle, the safety braking apparatus including: an actuator connected to a brake pedal in the automated vehicle to forcedly pull the brake pedal in order to stop the automated vehicle; and a control circuit for controlling the actuator, wherein the control circuit may include a velocity sensor for sensing a velocity of the automated vehicle in real-time and an object sensor for detecting an object around the automated vehicle in real-time, and the safety braking apparatus is configured to manipulate the actuator in order to execute and maintain a braking operation by the brake pedal when the automated vehicle moves forward or backward at a predetermined velocity or less without a driver stepping on an acceleration pedal and an object around the automated vehicle approaches the automated vehicle within a predetermined distance, and to cancel the braking operation by the brake pedal in order to drive the automated vehicle continuously when the driver steps on the acceleration pedal.

The control circuit may include: a first relay device that is connected between a common contact point of a drive terminal and a reverse terminal of an inhibiter switch in the automated vehicle and a ground to be in a conduction state when the automated vehicle moves forward or backward and includes a contact point for operating the velocity sensor in the conduction state; a second relay device that is in a conduction state due to an output from the velocity sensor when a velocity of the automated vehicle is equal to or less than a predetermined speed level and has a contact point for operating the object sensor in the conduction state; a third relay device that is in a conduction state due to an output of the object sensor when an object within a predetermined distance from the automated vehicle is sensed and has a contact point for operating the actuator; and an acceleration pedal switch that is opened and closed in correspondence to the acceleration pedal in the automated vehicle and stops operation of the actuator when the driver steps on the acceleration pedal.

The safety braking apparatus may further include a unit for maintaining an operation state of the actuator before the driver steps on the acceleration pedal after the actuator is operated by the control circuit, without regard to whether the object is sensed or not by the object sensor.

The safety braking apparatus may further include an alarm unit for notifying about an object when the object sensor of the control circuit senses the object.

### ADVANTAGEOUS EFFECTS

According to the present invention, a velocity sensor and an object sensor of a control circuit, and an actuator are sequentially driven to execute an automatic braking operation using a brake pedal, and a braking mode is cancelled when a driver steps on an acceleration pedal after the automatic braking operation and a vehicle may keep moving.

Since the automatic braking operation is executed by the brake pedal in a case where an object is sensed during low speed driving of the vehicle, the driver may not feel anxious due to unexpected braking during high speed driving as in the conventional art. Also, the braking apparatus effectively operates even when the driver does not firmly step on the brake pedal, and in particular, the driver may continuously drive the vehicle by stepping on the acceleration pedal after the automatic braking operation, and thus, the driver may conveniently drive the vehicle.

Also, a unit for maintaining an operation state of the actuator relieves anxiety of the driver, which may be caused, for example, when the vehicle repeatedly moves and automatically stops according to movements of a front vehicle, and calls the driver's attention to make the driver safely drive the vehicle.

In addition, the safety braking apparatus of the present invention is a circuit device consisting of simple circuits and relay devices that are sequentially controlled, independent from an electronic control unit (ECU) in the vehicle, and thus, may be applied to existing vehicles without changing a program of the ECU.

### DESCRIPTION OF THE DRAWINGS

FIG. 1 is a schematic diagram of an actuator and a control circuit forming a safety braking apparatus of an automated vehicle, according to an embodiment of the present invention; and
FIG. 2 is a detailed diagram of the control circuit used in a safety braking apparatus of an automated vehicle, according to an embodiment of the present invention.

### BEST MODE

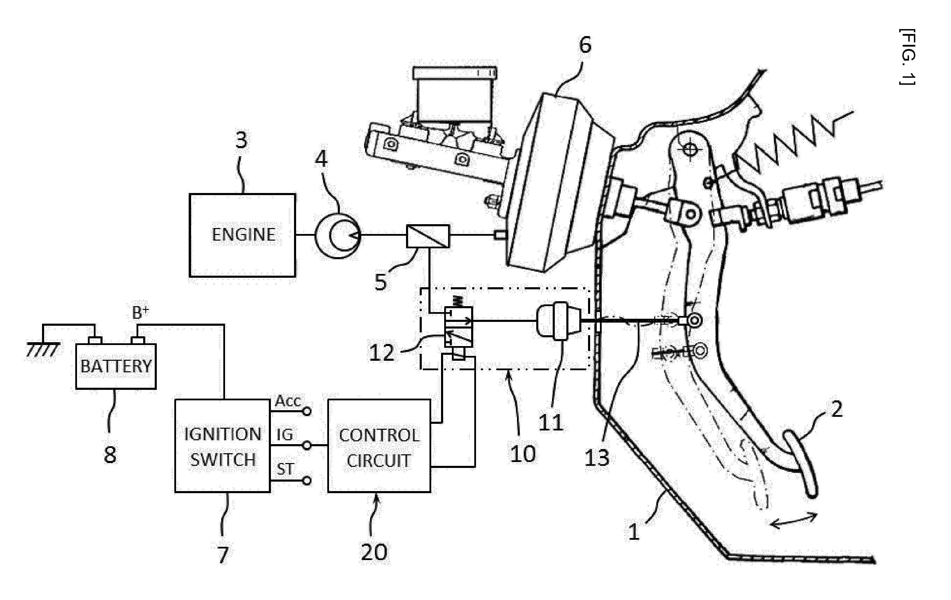

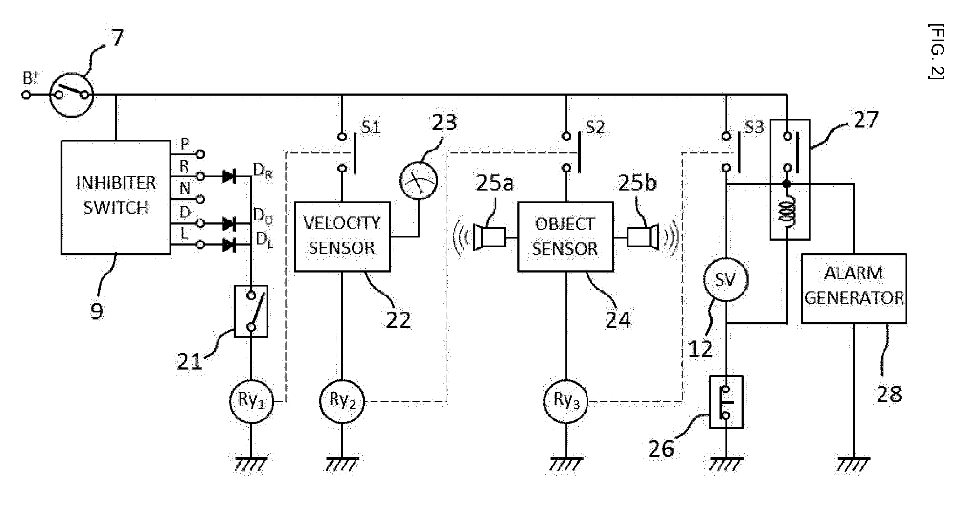

FIGS. 1 and 2 show a safety braking apparatus for an automated vehicle, according to an embodiment of the present invention. Sizes of elements in the drawings may be exaggerated for convenience of explanation. In other words, since sizes and thicknesses of components in the drawings are arbitrarily illustrated for convenience of explanation, the following embodiments are not limited thereto.

Referring to FIG. 1, the safety braking apparatus for the automated vehicle according to the present embodiment includes an actuator 10 and a control circuit 20. The actuator 10 may include, for example, a vacuum governor 11 operated by air pressure and a solenoid valve 12 for controlling a pneumatic flow path, and may be attached to a car frame 1 between an engine room and a driver seat in an automated vehicle. The vacuum governor 11 includes a plunger that appears and disappears according to a vacuum pressure operation, and the plunger and a brake pedal 2 are connected via a wire cable 13 so as to forcedly pull and manipulate the brake pedal 2. The vacuum governor 11 does not restrict the brake pedal 2 in a non-operation state, and the wire cable 3 is flexible and does not interfere with the manipulation of the brake pedal by a driver. In addition, in a case where the brake pedal 2 is pulled by the operation of the vacuum governor 11, the vehicle enters a stopped state, and there is no problem in terms of the safety of the driver.

An intake pressure of the engine 3 in the vehicle may be directly used as a fluid for operating the vacuum governor 11, for example, a flow control valve 5 is provided in a pneumatic tube between a vacuum pump 4 that is directly connected to the engine 3 and a brake booster 6 so as to use a vacuum pressure stably generated by the vacuum pump 4.

The solenoid valve 12 is, for example, a solenoid spring return 3-port 2-position control valve, and usually opens a port of the vacuum governor and connects the port to the vacuum pump 4 side when being operated by the control circuit 20, that is, when the solenoid is in an excitation state. That is, in a normal driving mode, the vacuum governor 11 is in an atmospheric state and does not pull the brake pedal 2, and the brake pedal 2 is pulled only when the vacuum governor 11 is operated.

The above actuator 10 is disclosed in more detail in Korean Patent Registration No. 10-0985922 and Korean Patent Application No. 10-2009-0003342 filed by the present inventor, and thus, detailed descriptions about the actuator 10 are not provided here.

The control circuit 20 is operated by a voltage B+ of a battery 8, which is supplied via an ignition terminal IG of an ignition switch 7 in the vehicle, and may include an opening/closing switch 21, a velocity sensor 22, an object sensor 24, first through third relay devices Ry₁, Ry₂, and Ry₃, and an acceleration pedal switch 26, with an inhibiter switch 9 in the vehicle, and may further include a timer switch 27 and an alarm generator 28.

The first relay device Ry₁ is connected between a common connection point of drive, reverse, and low speed terminals D, R, and L of the inhibiter switch 9 and a ground to be in a conduction state when a transmission lever is located in drive, reverse, or low speed positions by the driver and in a non-conduction state when the transmission lever is located at a neutral or park position. The first relay device Ry₁ generally includes a plurality of contact points, of which a normal open type contact point S1 is used in the present embodiment.

Diodes D_{R}, D_{D}, and D_{L} respectively connected to the drive, reverse, and low speed terminals D, R, and L of the inhibiter switch 9 are provided to prevent backflow and are necessary to prevent wrong operations of other control devices such as an electronic control unit (ECU) in the vehicle.

The opening/closing switch 21 that is connected to the first relay device Ry₁ in series is provided to turn the control circuit 20 off when an automatic control function is not necessary, and is not an essential member.

The velocity sensor 22 is connected to the ignition terminal IG of the ignition switch 7 via the normal open type contact point S1 of the first relay device Ry₁, and operates by receiving a power source via the normal open type contact point S1. That is, when the vehicle is moved because the driver manipulates the transmission lever of the vehicle to the drive, reverse, or low speed positions, the normal open type contact point S1 of the first relay device Ry₁ is closed (ON), and a velocity sensing function of the velocity sensor 22 is executed. In addition, if the vehicle does not move because the transmission lever is located at the park or neutral position, the normal open type contact point S1 of the first relay device Ry₁ is open (OFF) and the velocity sensor 22 does not operate. Thus, power consumption due to unnecessary operation of the velocity sensor 22 in a state where the vehicle does not move may be prevented. When the electric power is applied to the velocity sensor 22, the velocity sensor 22 senses the velocity of the vehicle in real-time from a speedometer sensor 23 in the vehicle. In addition, when the current velocity of the vehicle is equal to or less than a predetermined speed level that is set in advance, the velocity sensor 22 outputs the battery voltage, and when the current velocity of the vehicle is greater than the predetermined speed level, the velocity sensor 22 blocks the output of the battery voltage. The velocity sensor 22 and the speedometer sensor 23 are substantially the same as or similar to those disclosed in the above recited patent documents and will be obvious to one of ordinary skill in the art, and thus, detailed descriptions thereof are omitted.

The second relay device Ry₂ is connected between the velocity sensor 22 and the ground to be in a conduction state due to the output from the velocity sensor 22 and in a non-conduction state when there is no output or the output from the velocity sensor 22 is blocked. Likewise, the second relay device Ry₂ generally includes a plurality of contact points, of which a normal open type contact point S2 is used in the present embodiment.

The object sensor 24 is connected to the ignition terminal of the ignition switch 7 via the normal open type contact point S2 of the second relay device Ry₂, and may operate by receiving electric power via the normal open type contact point S2 while the velocity sensor 22 performs the velocity sensing operation. That is, if the vehicle moves and the velocity of the vehicle is sensed to be the predetermined speed level or less by the velocity sensor 22, the normal open type contact point S2 of the second relay device Ry₂ is closed (ON), and thus, the object sensor 24 performs the object sensing operation. If there is no output from the velocity sensor 22 or the velocity of the vehicle increases to block the output from the velocity sensor 22, the normal open type contact point S2 of the second relay device Ry₂ is open (OFF), and thus, the object sensor 24 does not operate. When receiving the electric power, the object sensor 24 senses an object in real-time by using additional object detecting sensors 25a and 25b, and the object sensor 24 outputs the battery voltage when it is sensed that the object is within a predetermined distance and the object sensor 24 blocks the output when there is no object sensed or the object goes beyond the predetermined distance. The object detecting sensors 25a and 25b may be ultrasound sensors that irradiate an ultrasound wave toward an object and detect a signal in response to a returning wave reflected by the object, and may be provided at one or more locations from among a front portion, a rear portion, and other peripheral portions of the vehicle. The object sensor 24 using the ultrasound sensor may be configured, for example, to recognize the distance from a signal wavelength of the reflected wave of the ultrasound sensor, which is substantially the same as or similar to that of the above patent documents and is well known to one of ordinary skill in the art, and thus, detailed descriptions are omitted.

The third relay device Ry₃ is connected between the object sensor 24 and the ground to be in a conduction state due to the output of the object sensor 24 and in a non-conduction state when there is no output or the output from the object sensor 24 is blocked. Likewise, the third relay device Ry₃ generally includes a plurality of contact points, of which a normal open type contact point S3 is used in the present embodiment.

A side of the above-described solenoid valve 12 is connected to the ignition terminal of the ignition switch 7 via the normal open type contact point S3 of the third relay device Ry₃ and the other side of the solenoid valve 12 is grounded via the acceleration pedal switch 26 that is a normal close type. Thus, the solenoid may be operated by the electric power applied via the contact point S3 while the object sensor 24 performs the object sensing performance. That is, if the vehicle moves at a predetermined speed or lower, the velocity of the vehicle is sensed to be a predetermined speed level or less by the velocity sensor 22, and an object within a predetermined distance is sensed by the object sensor 24, the contact point S3 of the third relay device Ry₃ is closed (ON) and the solenoid valve 12 is driven so that the brake pedal 2 is pulled by the actuator 11, that is, the automatic braking operation is executed.

The acceleration pedal switch 26 may be additionally installed or may exist in the vehicle in advance. The acceleration pedal switch 26 is connected to an acceleration pedal and is a normal close type contact point that is opened when the driver steps on the acceleration pedal to block the electric power to the solenoid valve 12. That is, in the automatic braking mode executed when the solenoid valve 12 operates, when the driver shifts the gear and steps on the acceleration pedal to drive the vehicle in the reverse direction, the automatic braking mode is cancelled and the driver may drive the vehicle continuously.

The delay timer relay device 27 includes a delay relay circuit (not denoted by a reference numeral) and a plurality of contact points (not denoted by reference numerals) for forming a delay hold circuit with respect to the contact point S3 of the third relay device Ry₃ by using one normal open type contact point from among the plurality of contact points, but is not an essential element. The delay relay circuit of the delay timer relay device 17 is connected the solenoid valve 12 in parallel, and the normal open type contact point of the delay timer relay device 27 is connected to the contact point S3 of the third relay device Ry₃ in parallel. That is, when the contact point S3 of the third relay device Ry₃ is closed (ON), the contact point of the delay timer relay device 27 is closed (ON) after a predetermined time (for example, five seconds) has passed, and thus, the operation of the solenoid valve 12 is maintained even when the output from the object sensor 24 is blocked. Therefore, a so-called jerking start-stop motion, that is, repeated movements of the vehicle, caused by the object sensor 24 that repeatedly operates due to a front vehicle that repeatedly goes and stops, may be prevented. The operation of the delay timer relay device 27 is stopped instantly when the acceleration pedal switch 26 is opened (OFF) by the driver.

The alarm generator 28 connected between the contact point S3 of the third relay device Ry₃ and the ground outputs alarm sound or voice stored in advance to notify the driver about the automatic braking mode, when the automatic braking mode is executed by sensing the object adjacent to the vehicle by the object sensor 24, but the alarm generator 28 is not an essential element. The driver may recognize that the object is adjacent to the front or rear portion of the vehicle through the alarm sound or the voice of the alarm generator 28. Therefore, negligent driving by the driver, for example, stepping on the acceleration pedal without shifting the gear after the automatic braking mode, may be prevented. The alarm generator 28 is initialized when the acceleration pedal switch 26 is opened (OFF) by the driver.

The above described embodiment describes a case where the velocity sensor 22, the object sensor 24, and the actuator 10 are sequentially controlled by using the first through third relay devices Ry₁, Ry₂, and Ry₃. However, the embodiments of the present invention are not limited thereto, that is, an order of operating the velocity sensor 22 and the object sensor 24 may be changed, and the number of the relay devices and the contact points may be appropriately selected.

## Claims

1. A safety braking apparatus of an automated vehicle, the safety braking apparatus comprising:
an actuator connected to a brake pedal in the automated vehicle to forcedly pull the brake pedal in order to stop the automated vehicle; and
a control circuit for controlling the actuator,
wherein the control circuit comprises a velocity sensor for sensing a velocity of the automated vehicle in real-time and an object sensor for detecting an object around the automated vehicle in real-time, and the safety braking apparatus is configured to manipulate the actuator in order to execute and maintain a braking operation_by the brake pedal when the automated vehicle moves forward or backward at a predetermined velocity or less without a driver stepping on an acceleration pedal and an object around the automated vehicle approaches the automated vehicle within a predetermined distance, and to cancel the braking operation by the brake pedal in order to drive the automated vehicle continuously when the driver steps on the acceleration pedal.

2. The safety braking apparatus of claim 1, wherein the control circuit comprises:
a first relay device that is connected between a common contact point of a drive terminal and a reverse terminal of an inhibiter switch in the automated vehicle and a ground to be in a conduction state when the automated vehicle moves forward or backward and includes a contact point for operating the velocity sensor in the conduction state;
a second relay device that is in a conduction state due to an output from the velocity sensor when a velocity of the automated vehicle is equal to or less than a predetermined speed level and has a contact point for operating the object sensor in the conduction state;
a third relay device that is in a conduction state due to an output of the object sensor when an object within a predetermined distance from the automated vehicle is sensed and has a contact point for operating the actuator; and
an acceleration pedal switch that is opened and closed in correspondence to the acceleration pedal in the automated vehicle and stops operation of the actuator when the driver steps on the acceleration pedal.

3. The safety braking apparatus of claim 1 or claim 2, further comprising a unit for maintaining an operation state of the actuator before the driver steps on the acceleration pedal after the actuator is operated by the control circuit, without regard to whether the object is sensed or not by the object sensor.

4. The safety braking apparatus of claim 1 or claim 2, further comprising an alarm unit for notifying about an object when the object sensor of the control circuit senses the object.
